# EUROPÄISCHE PATENTSCHRIFT

(11) **EP 3 867 732 B1**
(45) Veröffentlichungstag und Bekanntmachung des Hinweises auf die Patenterteilung: **23.08.2023**
(21) Anmeldenummer: 19752443.2
(22) Anmeldetag: 31.07.2019
(51) Int. Cl.: B60K 35/00, B60K 37/06, G06F 3/041, G06F 3/01, H01H 3/00

(54) **BEDIENVORRICHTUNG FÜR EIN FAHRZEUG**
OPERATING DEVICE FOR A VEHICLE
DISPOSITIF DE COMMANDE POUR UN VÉHICULE

(30) Priorität: 17.10.2018 DE 102018125769
(43) Veröffentlichungstag der Anmeldung: 25.08.2021
(73) Patentinhaber: Behr-Hella Thermocontrol GmbH, 59557 Lippstadt (DE)
(72) Erfinder: KEMPPINEN, Pasi, 33800 Tampere (FI)
(74) Vertreter: dompatent von Kreisler Selting Werner - Partnerschaft von Patent- und Rechtsanwälten mbB
(86) Internationale Anmeldenummer: PCT/EP2019/070595
(87) Internationale Veröffentlichungsnummer: WO 2020/078600

(56) Entgegenhaltungen:
- EP-A1- 3 379 386
- US-A1- 2009 243 817
- US-A1- 2016 195 931

## Beschreibung

Die Erfindung betrifft eine Bedienvorrichtung für ein Fahrzeug, und zwar beispielsweise für eine Fahrzeugkomponente wie eine Klimaanlage, ein Infotainment-System oder ein Navigationssystem, und ganz allgemein ein Mensch-Maschine-Interface (Human-Machine-Interface).

Der Einsatz von Displays im Fahrzeug, die gleichzeitig Eingabeelemente in Form von Touchoberflächen sind, erfreuen sich zunehmender Verbreitung. Bei diesen Touchdisplays, die bereits durch leichte Berührung ausgelöst werden, kommt es unter Umständen zur versehentlichen Betätigung. Wenn hierdurch sicherheitsrelevante Funktionen ausgelöst werden oder es zu anderen ungewollten Verstellungen einer Fahrzeugfunktion kommt, kann dies problematisch sein. In solchen Fällen wird eine zusätzliche Sensorik benötigt, mit der die Kraft erfassbar oder ermittelbar ist, mit der der Bediener auf den entsprechenden Bereich im Bedienfeld drückt. Auf diese Weise wird eine wesentliche Auslösung durch einfaches Auflegen vermieden. Da oft die Forderung nach einer starren Bedienoberfläche besteht, kommen als Sensorik hierbei im Wesentlichen kraftsensitive Widerstände, Dehnungsmessstreifen, optische oder kapazitive Sensoren zum Einsatz. Die Sensoren messen dabei üblicherweise einen Weg, den die Bedienoberfläche gegenüber einem starren Teil des Bauteils über die Auslenkung eines Federelements zurücklegt. Hierzu wird die Displayoberfläche üblicherweise im Gehäuse beweglich gelagert.

Aus DE-B-10 2016 002 021, DE-A-10 2016 108 899, EP-A-2 224 313, US-A-2009/0243817 und US-A-2016/0195931 sind Bedienvorrichtungen mit federnd gelagerten Bedienelementen bekannt. Eine Bedienvorrichtung mit den Merkmalen des Oberbegriffs des Anspruchs 1 ist in EP-A-3 379 386 beschrieben (siehe Fig. 4 dieser Schrift).

Die oben beschriebenen Prinzipien erfordern einen komplizierten Mechanismus, der die Bewegung des Displays gegenüber einem starren Gehäuseteil ermöglicht. Zudem werden ein oder mehrere Federelemente benötigt, was das Gesamtsystem verteuert.

Aufgabe der Erfindung ist es, eine Bedienvorrichtung für ein Fahrzeug anzugeben, deren Konstruktion zur Messung der Auslösekraft bei der manuellen Betätigung des Displays vereinfacht ist.

Zur Lösung dieser Aufgabe wird mit der Erfindung eine Bedienvorrichtung für ein Fahrzeug vorgeschlagen, die versehen ist mit
- einem Gehäuse mit einer Vorderseite, die eine von einem Öffnungsrand begrenzte Aufnahmeöffnung aufweist, und mit einer Rückwand,
- einem in der Aufnahmeöffnung mit Abstand zu deren Öffnungsrand angeordneten, eine Bedienoberfläche aufweisenden Bedienelement, das eine Vorderseite mit der Bedienoberfläche versehene Vorderseite, eine Rückseite und einen Begrenzungsrandbereich aufweist,
- einem Halteelement, das eine Bodenwand und von dieser aufragende Stützteile aufweist, die unterhalb des Begrenzungsrandbereichs des Bedienelements enden und mit diesem in dessen Begrenzungsrandbereich mechanisch gekoppelt sind,
- wobei die Bodenwand des Halteelements einen von den Stützteilen beabstandeten Mittenbereich aufweist, innerhalb dessen sich die Bodenwand des Halteelements an der Rückwand des Gehäuses abstützt,
- mehreren eine manuelle Betätigung des Bedienelements erfassenden Betätigungssensoren, die innerhalb des den Mittenbereich der Bodenwand des Halteelements umgebenden, einen Abstand zur Rückwand des Gehäuses aufweisenden Umgebungsbereichs zwischen der Bodenwand des Halteelements und der Rückwand des Gehäuses angeordnet sind, und die Biegemomente erfassen, die bei einer manuellen Betätigung des Bedienelements auf das Halteelement innerhalb von dessen den Mittenbereich umgebenden Umgebungsbereich wirken, und
- einer Auswerteeinheit, die Signale von den Betätigungssensoren empfängt und diese zwecks Erkennung einer manuellen Betätigung des Bedienelements mit einer vorgebbaren Mindestandrückkraft auswertet.

Ferner ist nach der Erfindung vorgesehen, dass das Bedienelement ein Display mit einer Information anzeigenden Vorderseite aufweist, die die Bedienoberfläche des Bedienelements bildet. Hierbei kann das Display eine die Bedienoberfläche definierende Abdeckscheibe mit einer hinter dieser angeordneten Anzeigeeinheit zur optischen Anzeige von Informationen aufweisen. Bei einer derartigen Ausgestaltung des Bedienelements mit Display steht die Abdeckscheibe zweckmäßigerweise allseitig über die Anzeigeeinheit über, wobei dieser Überstandsbereich den Begrenzungsrandbereich des Bedienelements bildet.

Die heutzutage bei Bedienvorrichtungen überwiegend eingesetzten Displays arbeiten mit LCD-Technologie. Zwecks besserer Sichtbarmachung der angezeigten Information sind derartige Displays mit Hinterleuchtungseinheiten ausgestattet. Das Halteelement, das bei der erfindungsgemäßen Bedienvorrichtung das Bedienelement stützt, wird zur Aufnahme einer derartigen Hinterleuchtungseinheit verwendet. Alternativ werden aber auch Displays eingesetzt, bei denen die einzelnen Pixel dann, wenn sie zur Anzeige von Information benötigt werden, sozusagen selbsttätig leuchten. Das Display ist also anders als bei der LCD-Technologie nicht als eine Art Shutter ausgebildet, sondern ist mit aktiv für die Aufleuchtung ansteuerbaren einzelnen Pixel versehen. Ein Beispiel für ein derartiges Display ist beispielsweise ein OLED-Display. Bei den zwecks Aufleuchtung einzelner Pixel aktiv ansteuerbaren Displays bedarf es an sich einer Hinterleuchtungseinheit nicht mehr. Das Halteelement erfüllt bei derartigen Displays dann die Funktion eines mechanischen Schutzes der Rückseite des Displays, die das Halteelement im Übrigen auch dann ausübt, wenn das Display eine vom Halteelement aufgenommene Hinterleuchtungseinheit aufweist. In beiden Fällen deckt das Halteelement die Rückseite des Displays mehr oder weniger ab.

Mit der Erfindung wird sinngemäß vorgeschlagen, das Halteelement, das das Bedienelement stützt, für die Übertragung der Andrückkraft an entsprechende Betätigungssensoren zu nutzen, die sensieren, mit welcher Andrückkraft die Bedienoberfläche des Bedienelements betätigt wird.

Das Halteelement ist im Wesentlichen als mulden- bzw. wannenförmiges Element ausgebildet, das eine Bodenwand aufweist, von der an vorzugsweise sämtlichen Randabschnitten Stützteile aufragen. Insbesondere weist die Bodenwand eine umlaufende aufragende Umfangswand auf, die zweckmäßigerweise in einen ebenfalls umlaufenden Flansch übergeht. Die Stützteile sind dann bei dieser Variante der Erfindung als diejenigen Seitenwandabschnitte ausgebildet, die längs jedes Randabschnitts der Bodenwand von dieser aufragen. Es ist aber auch denkbar, dass von der Bodenwand an vorzugsweise sämtlichen Randabschnitten einzelne, voneinander getrennte und damit beabstandete Stützteile aufragen.

Die Stützteile sind in einem Begrenzungsrandbereich des Bedienelements mit diesem gekoppelt. Das Bedienelement selbst weist eine die Bedienoberfläche bildende Vorderseite, eine Rückseite und den zuvor genannten umlaufenden Begrenzungsrandbereich auf.

Das Halteelement selbst befindet sich in dem Gehäuse der Bedienvorrichtung, das eine Vorderseite aufweist, die eine von einem Öffnungsrand begrenzte Aufnahmeöffnung aufweist, innerhalb derer das Bedienelement angeordnet ist. Das Gehäuse weist ferner eine Rückwand auf. Schließlich weist das Gehäuse auch Seitenwände auf.

Eine Besonderheit der erfindungsgemäßen Bedienvorrichtung ist darin zu sehen, dass das Halteelement in einem Mittenbereich seiner Bodenwand starr mit der Rückwand des Gehäuses verbunden ist. Die Rückwand stützt also in diesem Mittenbereich der Bodenwand das Halteelement. Außerhalb des Mittenbereichs, d.h. im Umgebungsbereich des Mittenbereichs der Bodenwand, ist das Halteelement zur Rückwand des Gehäuses beabstandet; zwischen Halteelement und Rückwand bildet sich ein Ringspalt.

Wird nun die Bedienoberfläche des Bedienelements manuell betätigt, so erfährt das Halteelement und insbesondere dessen Bodenwand ein Biegemoment. Denn die Kraft, mit der manuell gegen die Bedienoberfläche des Bedienelements gedrückt wird, wird über den Begrenzungsrandbereich des Bedienelements und die mit diesem Begrenzungsrandbereich mechanisch gekoppelten Stützteile in die Bodenwand übertragen. Da die Bodenwand zentral gelagert ist und ansonsten einen Spalt zur Rückwand des Gehäuses aufweist, kann sich die Bodenwand nun wie ein einseitig eingespannter Biegebalken verformen bzw. dementsprechende Biegemomente aufnehmen. Diese werden an Betätigungssensoren übertragen, die sich zwischen dem Umgebungsbereich um den Mittenbereich der Bodenwand herum und der Rückwand des Gehäuses befinden. Die Betätigungssensoren können als Weg- und/oder als Kraft- und/oder als Drucksensoren ausgeführt sein. Insbesondere eignen sich MEMS-Bauteile (mikroelektronische mechanische Sensoren). Die Messsignale der Betätigungssensoren werden an eine Auswerteeinheit übertragen, die unter anderem einen Mikroprozessor mit entsprechender Hardware-Umgebung aufweist. In der Auswerteeinheit werden die Messsignale der Betätigungssensoren ausgewertet, und zwar zwecks Erkennung einer validen manuellen Betätigung, d.h. einer Betätigung des Bedienelements mit einer vorgebbaren Mindestandrückkraft. Somit können also Fehlbedienungen des Bedienelements ausgeschlossen werden.

Die erfindungsgemäße Bedienvorrichtung zeichnet sich durch eine kompakte Bauweise aus. Die schubsteife Verbindung des Halteelements mit der Rückwand des Gehäuses erlaubt es, zwischen dem Halteelement und dem Bedienelement einen Aktuator für ein gegebenenfalls gewünschtes haptisches Feedback der Bedienvorrichtung vorzusehen. In diesem Fall würde sich der Aktuator einerseits an dem Halteelement abstützen, um das Bedienelement impulsartig mechanisch anzuregen, und zwar beispielsweise zwecks lateraler impulsartiger Bewegung des Bedienelements, was manuell taktil erfassbar ist und somit eine valide Betätigung des Bedienelements taktil rückmeldet.

In weiterer vorteilhafter Ausgestaltung der Erfindung ist vorgesehen, dass die Auswerteeinheit ferner die Signale der Betätigungssensoren zwecks Erkennung derjenigen Position auf der Bedienoberfläche des Bedienelements auswertet, an der die manuelle Betätigung des Bedienelements erfolgt.

Alternativ oder auch zusätzlich kann das Bedienelement versehen sein mit einer Berührungssensorik zur Erkennung derjenigen Position auf der Bedienoberfläche des Bedienelements, an der die manuelle Betätigung des Bedienelements erfolgt. Die Berührungssensorik kann kapazitiv, resistiv oder optisch arbeiten. Im Falle des Einsatzes von MEMS kann das Biegemoment, dem die Bodenwand des Halteelements bei einer manuellen Betätigung der Bedienoberfläche des Bedienelements ausgesetzt ist, auf Biegebalken, Biegemembranen o.dgl. übertragen werden, wobei die mechanische Verbiegung dieser mikromechanischen Elemente der MEMS durch Transistor- oder Widerstandsmessdrücken bzw. anderen mikromechanischen, mikroelektrischen Bauelementen erfasst wird.

In weiterer zweckmäßiger Ausgestaltung der Erfindung können die Stützteile und der Begrenzungsrandbereich des Bedienelements starr miteinander verbunden sein.

Wie bereits oben erwähnt, kann die erfindungsgemäße Bedienvorrichtung auch mit einer Haptik-Feedback-Funktionalität ausgestattet werden. Dabei verfährt man im Allgemeinen dergestalt, dass die Bedienoberfläche mechanisch angeregt wird, wenn eine valide Betätigung detektiert worden ist. Dazu müsste das Bedienelement samt Halteelement elastisch angebunden sein. Bei dem im Rahmen dieser Erfindung vorgestellten Konzept der schubsteifen Verbindung des Halteelements des Bedienelements mit der Rückwand des Gehäuses verbleibt dann also zur mechanischen Anregung für die Haptik-Feedback-Funktionalität das Bedienelement, das zu diesem Zweck mit den Stützteilen des Halteelements elastisch und damit rückstellfähig verbunden sein muss. Insoweit schlägt also eine Variante der Erfindung vor, dass die Stützteile und der Begrenzungsrandbereich des Bedienelements mittels eines zwischen diesen angeordneten rückstellfähigen Verbindungselements miteinander mechanisch gekoppelt sind.

Besonders vorteilhaft ist es, wenn das Verbindungselement nach einer senkrecht zur Bedienoberfläche des Bedienelements erfolgenden Komprimierung rückstellfähig und bei einer orthogonal hierzu erfolgenden Verschiebung des Bedienelements rückstellfähig scherbar ist. Als Material für das Verbindungselement eignet sich elastomeres Material wie beispielsweise Gummi oder Silikon. Das Verbindungselement ist zweckmäßigerweise als Streifenmaterial ausgebildet, das vorzugsweise längs des gesamten Begrenzungsrandbereichs verläuft und diesen an die Stützteile des Halteelements mechanisch ankoppelt. Durch die geometrische Form des Streifenmaterials lässt sich dessen Elastizität senkrecht zur Bedienoberfläche und quer dazu in gewissen Grenzen beeinflussen. Es ist auch möglich, Verbundmaterial einzusetzen, d.h. elastomeres Material und in dieses eingebettete starre Körper, die die Komprimierbarkeit senkrecht zur Bedienoberfläche stark reduzieren bzw. gänzlich unterbinden, nichtsdestotrotz aber die quer dazu gerichtete Scherbarkeit des Verbindungselements weiterhin gewährleiten.

Mit dem zuvor beschriebenen Konzept der elastischen Anbindung des Bedienelements an das Halteelement ist es nun möglich, zwischen dem Halteelement und dem Bedienelement einen Aktuator für das haptische Feedback anzuordnen, der sich am Halteelement (und damit über dieses am Gehäuse) abstützt und mit seinem Stellglied das Bedienelement mechanisch anregt. Als Aktuator eignet sich beispielsweise ein elektromechanischer Aktuator wie beispielsweise ein Zuganker, oder aber auch ein Piezoaktuator (mit oder ohne Verstärkungsgetriebe). In weiterer vorteilhafter Ausgestaltung der Erfindung kann vorgesehen sein, dass das Bedienelement ein Display mit einer Information anzeigenden Vorderseite aufweist, die die Bedienoberfläche des Bedienelements bildet. Hierbei kann das Display eine die Bedienoberfläche definierende Abdeckscheibe mit einer hinter dieser angeordneten Anzeigeeinheit zur optischen Anzeige von Informationen aufweisen. Bei einer derartigen Ausgestaltung des Bedienelements mit Display steht die Abdeckscheibe zweckmäßigerweise allseitig über die Anzeigeeinheit über, wobei dieser Überstandsbereich den Begrenzungsrandbereich des Bedienelements bildet.

Die heutzutage bei Bedienvorrichtungen überwiegend eingesetzten Displays arbeiten mit LCD-Technologie. Zwecks besserer Sichtbarmachung der angezeigten Information sind derartige Displays mit Hinterleuchtungseinheiten ausgestattet. Das Halteelement, das bei der erfindungsgemäßen Bedienvorrichtung das Bedienelement stützt, kann nun zweckmäßigerweise zur Aufnahme einer derartigen Hinterleuchtungseinheit verwendet werden. Alternativ werden aber auch Displays eingesetzt, bei denen die einzelnen Pixel dann, wenn sie zur Anzeige von Information benötigt werden, sozusagen selbsttätig leuchten. Das Display ist also anders als bei der LCD-Technologie nicht als eine Art Shutter ausgebildet, sondern ist mit aktiv für die Aufleuchtung ansteuerbaren einzelnen Pixel versehen. Ein Beispiel für ein derartiges Display ist beispielsweise ein OLED-Display. Bei den zwecks Aufleuchtung einzelner Pixel aktiv ansteuerbaren Displays bedarf es an sich einer Hinterleuchtungseinheit nicht mehr. Das Halteelement erfüllt bei derartigen Displays dann die Funktion eines mechanischen Schutzes der Rückseite des Displays, die das Halteelement im Übrigen auch dann ausübt, wenn das Display eine vom Halteelement aufgenommene Hinterleuchtungseinheit aufweist. In beiden Fällen deckt das Halteelement die Rückseite des Displays mehr oder weniger ab.

Das erfindungsgemäße Konzept, das Halteelement für die Übertragung der bei einer manuellen Betätigung auf das Bedienelement wirkenden Momente zu nutzen, ist in all diesen Fällen dasselbe.

Die Erfindung wird nachfolgend anhand eines Ausführungsbeispiels und unter Bezugnahme auf die Zeichnung näher erläutert. Im Einzelnen zeigen dabei:
- Fig. 1: eine Schnittansicht durch den Aufbau einer Bedienvorrichtung gemäß einem Ausführungsbeispiel der Erfindung,
- Fig. 2: eine Draufsicht auf die Bedienvorrichtung,
- Fig. 3: die Situation, in der mit einem Finger einer Hand Druck auf die Bedienoberfläche des Bedienelements der Bedienvorrichtung ausgeübt wird, und
- Fig. 4: die Situation, in der infolge einer validen Betätigung der Bedienoberfläche des Bedienelements dieses mechanisch impulsartig lateral angeregt wird.

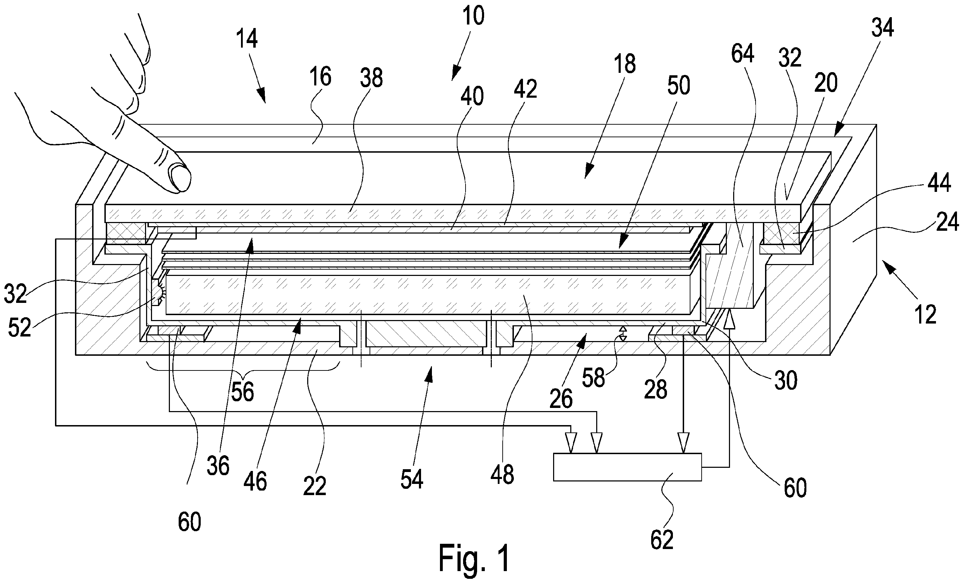

Fig. 1 zeigt schematisch den grundsätzlichen Aufbau einer Bedienvorrichtung 10 gemäß einem Ausführungsbeispiel der Erfindung. Die Bedienvorrichtung 10 weist ein Gehäuse 12 auf, das an seiner Vorderseite 14 eine Aufnahmeöffnung 16 aufweist, innerhalb derer ein Bedienelement 18 mit einer Bedienoberfläche 20 angeordnet ist. Das Gehäuse weist ferner eine Rückwand 22 auf, die über Seitenwände 24 mit der Vorderseite 14 des Gehäuses 12 verbunden ist.

Innerhalb des Gehäuses 12 befindet sich ein in diesem Ausführungsbeispiel wannenförmiges Halteelement 26, das eine Bodenwand 28 aufweist, von der allseitig der Bodenwand 28 aufragende Stützteile 30 hochstehen, die in einen nach außen weisenden Montageflansch 32 übergehen. Der Montageflansch 32 ist mit dem umlaufenden Begrenzungsrandbereich 34 des Bedienelements 18 mechanisch gekoppelt.

In diesem Ausführungsbeispiel ist das Bedienelement 18 als Display 36 ausgebildet. Das Display 36 weist eine Abdeckscheibe 38 auf, deren Vorderseite die Bedienoberfläche 20 des Bedienelements 18 bildet. Hinter der Abdeckscheibe 38 befindet sich die Anzeigeeinheit 40 (beispielsweise in LCD-Technologie realisiert). Ferner kann das Display 36 auch noch eine Berührungssensorik in Form eines Touch-Panel 42 aufweisen. Derartige Displays sind im Stand der Technik grundsätzlich bekannt und sollen hier nicht weiter beschrieben werden.

Im Begrenzungsrandbereich 34 der Abdeckscheibe 38 ist diese rückstellfähig mit dem Montageflansch 32 verbunden. Dies erfolgt durch ein Verbindungselement 44, das in diesem Ausführungsbeispiel als längs des Montageflansches 32 verlaufendes elastomeres Band ausgeführt ist. Das Verbindungselement ist beispielsweise mit dem Montageflansch 32 und mit der Abdeckscheibe 38 schubsteif verklebt.

Innerhalb des wannenförmigen Halteelements 26 befindet sich eine Hinterleuchtungseinheit 46 zum Hinterleuchten des Displays 36, die ein Lichtleiterelement 48 und einen Diffusor 50 zur Homogenisierung des vom Lichtleiterelement 48 in Richtung auf das Display 36 abgestrahlten Lichts aufweist. In das Lichtleiterelement 48 wird in diesem Ausführungsbeispiel über an der Innenseite der Stützelemente angeordnete LEDs als Lichtquellen 52 Licht eingespeist. Auch diese Technologie ist grundsätzlich bekannt und soll hier nicht weiter erläutert werden.

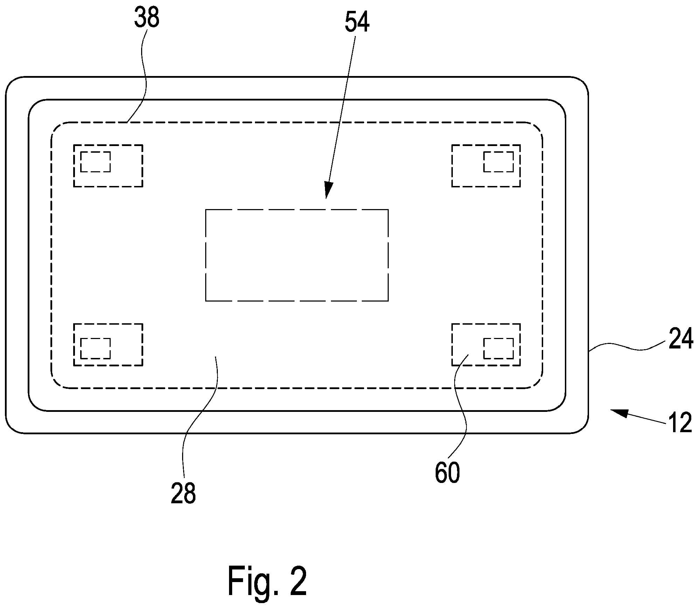

Eine Besonderheit der Bedienvorrichtung 10 gemäß Fig. 1 ist in der starren Verbindung des Halteelements 26 mit der Rückwand 22 des Gehäuses 12 zu sehen. Dies ist in Fig. 1 gezeigt. Hierbei ist ein Mittenbereich 54 der Bodenwand 28 mit der Rückwand 22 des Gehäuses 12 verbunden. Der Umgebungsbereich 56 der Bodenwand 28, der sich um den Mittenbereich 54 allseitig herum erstreckt, ist mit Abstand zur Rückwand 22 des Gehäuses 12 angeordnet (siehe den Spaltraum 58). In diesem Zwischenraum befinden sich vorzugsweise in den Eckenbereichen der Bodenwand 28 Betätigungssensoren 60, wie dies in Fig. 2 angedeutet ist.

Die Betätigungssensoren 60 liefern ihre Messsignale an eine Auswerteeinheit 62, die darüber hinaus auch von der Berührungssensorik (Touch-Panel 42) des Displays 36 Informationen empfängt. In der Auswerteeinheit 62 erfolgt nun die Analyse der Signale der Betätigungssensoren 60, um zu entscheiden, ob bei manueller Betätigung der Bedienoberfläche 20 gegen diese mit einer Mindestandrückkraft gedrückt worden ist, was für eine valide Betätigung der Bedienoberfläche 20 maßgebend ist.

Die Bedienvorrichtung 10 ist darüber hinaus mit einer Haptik-Feedback-Funktionalität ausgestattet. Zu diesem Zweck weist die Bedienvorrichtung 10 einen Aktuator 64 auf, der beispielsweise als elektromagnetisches Stellglied oder aber auch als Piezoaktuator ausgebildet ist. Aufgabe dieses Aktuators 64 ist es, bei Erkennung einer validen Betätigung des Bedienelements 18 dieses lateral impulsartig mechanisch anzuregen. Zu diesem Zweck dient unter anderem das elastische Verbindungselement 44, das einerseits die Kraft- bzw. Momentenübertragung vom Bedienelement 18 über das Halteelement 26 zu den Betätigungssensoren 60 erlaubt und andererseits aber auch eine lateral wirkende Scherung ermöglicht.

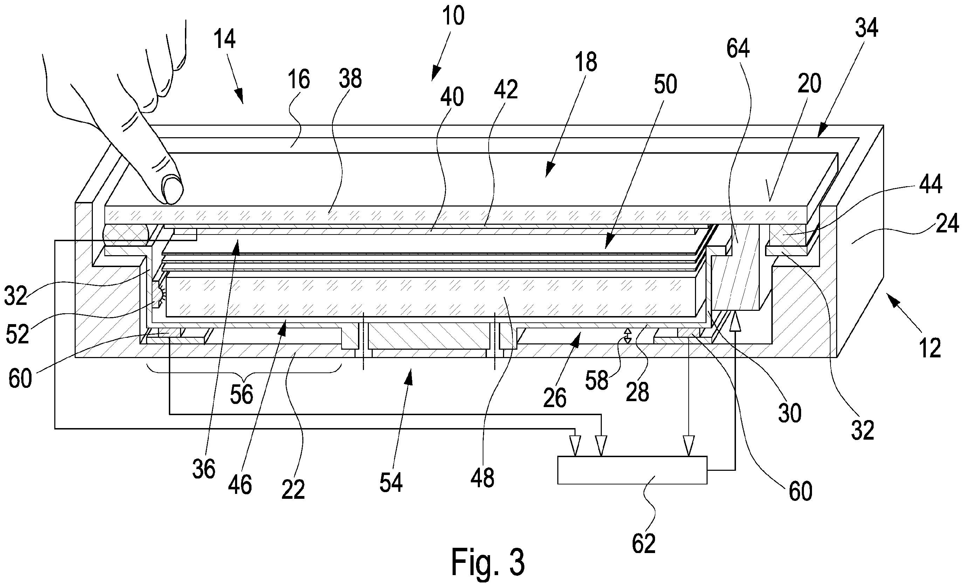

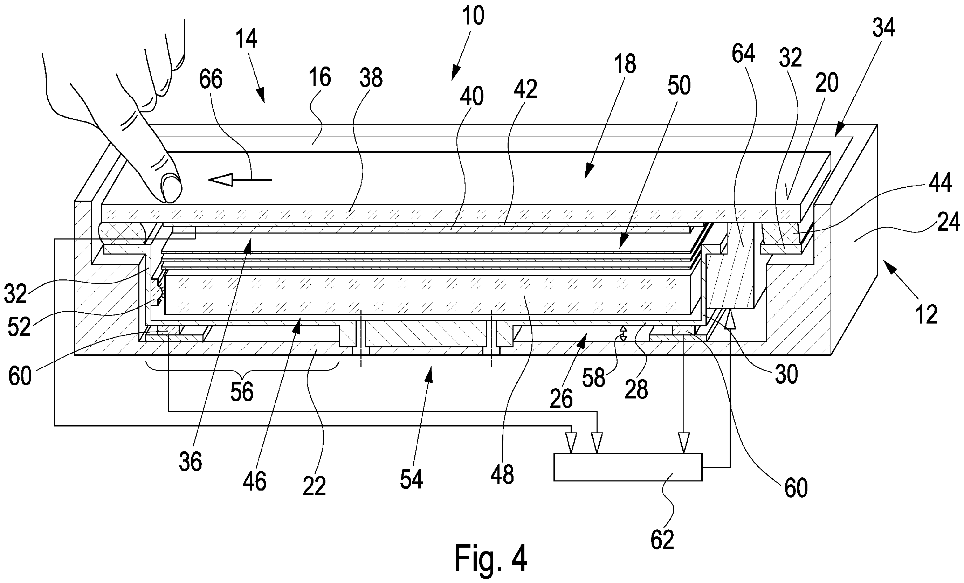

Dies ist in den Fign. 3 und 4 gezeigt. In Fig. 3 ist die Situation im Augenblick der manuellen Berührung der Bedienoberfläche 20 mit einer für eine valide Betätigung erforderlichen Mindestandrückkraft gezeigt. Die Betätigungssensoren 60 sensieren eine Andrückkraft. Wenn diese größer ist als die Mindestandrücckraft, gibt die Auswerteeinheit 62 ein Ansteuersignal an den Aktuator 64 aus, der das Bedienelement 18 impulsartig mechanisch lateral anregt, was in Fig. 4 mit dem Pfeil 66 angedeutet ist.

In Fig. 3 ist gezeigt, dass bei einer dezentralen manuellen Druckausübung auf die Bedienoberfläche 20 die Betätigungssensoren 60, die dem Berührungspunkt der Bedienoberfläche 20 gegenüberliegen (d.h. der bzw. die beiden in Fig. 3 rechts gezeigten Berührungssensoren 60) noch Kontakt zum Halteelement 26 haben. Bei Druck- oder Kraftsensoren als Betätigungssensoren 60 ist dies gegebenenfalls sinnvoll. Bei Einsatz von Wegsensoren als Betätigungssensoren 60 kann hier auch ein Abstand zwischen diesen Sensoren und dem Halteelement 26 (bei Anordnung der Sensoren auf der Rückwand 22 des Gehäuses 12) oder zwischen diesen Sensoren und der Rückwand 22 (bei Anordnung dieser Sensoren an der Unterseite des Halteelements 26) entstehen bzw. im Ruhezustand des Bedienelements 18 vorhanden sein.

Die Betätigungssensoren 60 können neben der Detektion, ob bei Berührung der Bedienoberfläche 20 mit der vorgebbaren Mindestandrückkraft gearbeitet worden ist, auch dazu genutzt werden, um den Ort, an dem manuell auf das Bedienelement 18 eingewirkt worden ist, genutzt werden. Die Kraft, mit der gegen die Bedienoberfläche 20 manuell gedrückt wird, wirkt sich je nach dem Ort, an dem auf die Bedienoberfläche 20 eingewirkt wird, als unterschiedlich große Messsignale der mehreren Betätigungssensoren 60 aus. Durch vorherige entsprechende Kalibrierung kann dann je nach Messsignalmuster auf den Ort der manuellen Betätigung der Bedienoberfläche 20 geschlossen werden.

Diese Beschreibung beschreibt mehrere Ausführungsformen. Die beschriebenen Ausführungsformen sind jedoch nicht so zu verstehen, dass sie notwendigerweise die Erfindung definieren. Die beschriebenen Ausführungsformen definieren nur dann die Erfindung, wenn sie in den Umfang der beigefügten Ansprüche fallen. Daher ist der Schutzumfang der vorliegenden Erfindung ausschließlich durch die beigefügten Ansprüche definiert.

### BEZUGSZEICHENLISTE

- 10: Bedienvorrichtung
- 12: Gehäuse
- 14: Vorderseite des Gehäuses
- 16: Aufnahmeöffnung in der Vorderseite
- 18: Bedienelement
- 20: Bedienoberfläche des Gehäuses
- 22: Rückwand des Gehäuses
- 24: Seitenwände des Gehäuses
- 26: Halteelement
- 28: Bodenwand des Halteelements
- 30: Stützteile des Halteelements
- 32: Montageflansch der Stützteile
- 34: Begrenzungsrandbereich des Bedienelements
- 36: Display
- 38: Abdeckscheibe des Displays
- 40: Anzeigeeinheit des Displays
- 42: Touch-Panel des Displays
- 44: Verbindungselement
- 46: Hinterleuchtungseinheit des Displays
- 48: Lichtleiterelement der Hinterleuchtungseinheit
- 50: Diffusor der Hinterleuchtungseinheit
- 52: Lichtquellen der Hinterleuchtungseinheit
- 54: Mittenbereich der Bodenwand
- 56: Umgebungsbereich um den Mittenbereich
- 60: Betätigungssensoren
- 62: Auswerteeinheit
- 64: Aktuator
- 66: Pfeil

## Patentansprüche

1. Bedienvorrichtung für ein Fahrzeug, mit
- einem Gehäuse (12) mit einer Vorderseite (14), die eine von einem Öffnungsrand begrenzte Aufnahmeöffnung (16) aufweist, und mit einer Rückwand (22),
- einem in der Aufnahmeöffnung (16) mit Abstand zu deren Öffnungsrand angeordneten, eine Bedienoberfläche (20) aufweisenden Bedienelement (18), das eine mit der Bedienoberfläche (20) versehene Vorderseite und eine Rückseite aufweist,
- einem Halteelement (26), das eine Bodenwand (28) und von dieser aufragende Stützteile (30) aufweist, die unterhalb eines Begrenzungsrandbereichs (34) des Bedienelements (18) enden und mit diesem in dessen Begrenzungsrandbereich (34) mechanisch gekoppelt sind,
- wobei die Bodenwand (28) des Halteelements (26) einen von den Stützteilen (30) beabstandeten Mittenbereich (54) und einen diesen umgebenden Umgebungsbereich aufweist, wobei die Bodenwand (28) des Halteelements (26) an der Rückwand des Gehäuses (12) im Mittenbereich (54) abgestützt ist und wobei der Umgebungsbereich der Bodenwand (28) einen Abstand zur Rückwand des Gehäuses (12) aufweist,
- mehreren eine manuelle Betätigung des Bedienelements (18) erfassenden Betätigungssensoren (60), die zwischen dem Umgebungsbereich der Bodenwand (28) des Halteelements (26) und der Rückwand des Gehäuses (12) angeordnet sind, wobei die Betätigungssensoren (60) die Biegemomente erfassen, die bei einer manuellen Betätigung des Bedienelements (18) auf das Halteelement (26) innerhalb von dessen den Mittenbereich (54) umgebenden Umgebungsbereich wirken, und
- einer Auswerteeinheit (62), die Signale von den Betätigungssensoren (60) empfängt und diese zwecks Erkennung einer manuellen Betätigung des Bedienelements (18) mit einer vorgebbaren Mindestandrücckraft auswertet,
- wobei das Bedienelement (18) ein Display (36) mit einer Information anzeigenden Vorderseite aufweist,
**dadurch gekennzeichnet,**
- **dass** das Display (36) eine die Bedienoberfläche (20) definierende Abdeckscheibe (38) mit einer hinter dieser Abdeckscheibe (38) angeordneten Anzeigeeinheit (40) zur optischen Anzeige von Informationen aufweist,
- **dass** die Abdeckscheibe (38) allseitig über die Anzeigeeinheit (40) übersteht und dieser Überstandsbereich den Begrenzungsrandbereich (34) des Bedienelements (18) bildet und somit dieser Überstandsbereich der Abdeckscheibe (38) mit den Stützteilen (30) des Halteelements (26) mechanisch gekoppelt ist und
- **dass** das Halteelement (26) eine Hinterleuchtungseinheit (46) zum Hinterleuchten der Anzeigeeinheit (40) aufnimmt.

2. Bedienvorrichtung nach Anspruch 1, wobei die Auswerteeinheit (62) ferner die Signale der Betätigungssensoren (60) zwecks Erkennung derjenigen Position auf der Bedienoberfläche (20) des Bedienelements (18) auswertet, an der die manuelle Betätigung des Bedienelements (18) erfolgt.

3. Bedienvorrichtung nach Anspruch 1, wobei das Bedienelement (18) versehen ist mit einer Berührungssensorik zur Erkennung derjenigen Position auf der Bedienoberfläche (20) des Bedienelements (18), an der die manuelle Betätigung des Bedienelements (18) erfolgt.

4. Bedienvorrichtung nach Anspruch 3, wobei die Berührungssensorik kapazitiv, resistiv oder optisch arbeitet.

5. Bedienvorrichtung nach einem der Ansprüche 1 bis 4, wobei die Stützteile (30) und der Begrenzungsrandbereich (34) des Bedienelements (18) starr miteinander verbunden sind.

6. Bedienvorrichtung nach einem der Ansprüche 1 bis 4, wobei die Stützteile (30) und der Begrenzungsrandbereich (34) des Bedienelements (18) mittels eines zwischen diesen angeordneten rückstellfähigen Verbindungselements (44) miteinander mechanisch gekoppelt sind.

7. Bedienvorrichtung nach Anspruch 6, wobei das Verbindungselement (44) nach einer senkrecht zur Bedienoberfläche (20) des Bedienelements (18) erfolgenden Komprimierung rückstellfähig und bei einer orthogonal zu einer solchen zur Bedienoberfläche (20) senkrechten Komprimierung erfolgenden Verschiebung des Bedienelements rückstellfähig scherbar ist.

8. Bedienvorrichtung nach Anspruch 6 oder nach Anspruch 7, ferner mit einem von der Auswerteeinheit (62) ansteuerbaren Aktuator zur Erzeugung einer taktilen Rückmeldung bei einer mit der vorgegebenen Mindestandrückkraft erfolgten Betätigung des Bedienelements (18) durch mechanische Einwirkung auf das Bedienelement (18).

9. Bedienvorrichtung nach einem der Ansprüche 1 bis 8, wobei die Betätigungssensoren (60) Weg- und/oder Kraft- und/oder Drucksensoren aufweisen.

## Claims

1. An operating device for a vehicle, comprising
- a housing (12) having a front face (14) comprising a receiving opening (16) being delimited by an opening edge, and having a rear wall (22),
- an operating element (18) being arranged in the receiving opening (16) at a distance from the opening edge thereof and having an operating surface (20), said operating element (18) having a front face provided with the operating surface (20), and a rear face,
- a holding element (26) having a bottom wall (28) and support parts (30) which protrude from the bottom wall (28), end below a delimiting edge region (34) of the operating element (18), and are mechanically coupled to the operating element (18) in the delimiting edge region (34),
- wherein the bottom wall (28) of the holding element (26) has a central region (54) which is spaced from the support parts (30), and a surrounding region surrounding the central region (54), wherein the bottom wall (28) of the holding element (26) is supported against the rear wall of the housing (12) in the central region (54), and wherein the surrounding region of the bottom wall (28) has a distance to the rear wall of the housing (12),
- a plurality of actuation sensors (60) for detecting a manual actuation of the operating element (18), wherein the plurality of actuation sensors (60) are arranged between the bottom wall (28) of the holding element (26) and the rear wall of the housing (12), wherein the actuation sensors (60) detect the bending moments which, upon manual actuation of the operating element (18), act on the holding element (26) within the surrounding region of the holding element (26) that surrounds the central region (54), and
- an evaluation unit (62) receiving signals from the actuation sensors (60) and evaluating said signals for the purpose of detecting a manual actuation of the operating element (18) with a predefinable minimum pressing force,
- wherein the operating element (18) comprises a display (36) with a front face that displays information,
**characterized in that**
- the display (36) comprises a cover pane (38) defining the operating surface (20) with a display unit (40) for optical display of information being arranged behind the cover pane (38),
- the cover pane (38) protrudes over the display unit (40) on all sides and said protruding area forms the delimiting edge region (34) of the operating element (18), and thus said protruding area of the cover pane (38) is mechanically coupled to the support parts (30) of the holding element (26), and
- the holding element (26) receives a backlight unit (46) for backlighting the display unit (40).

2. The operating device according to claim 1, wherein the evaluation unit (62) further evaluates the signals of the actuation sensors (60) for the purpose of recognizing the position on the operating surface (20) of the operating element (18) on which the manual actuation of the operating element (18) is performed.

3. The operating device according to claim 1, wherein the operating element (18) is provided with a touch sensing system for recognizing the position on the operating surface (20) of the operating element (18) on which the manual actuation of the operating element (18) is performed.

4. The operating device according to claim 3, wherein the touch sensing system works in a capacitive, resistive or optical manner.

5. The operating device according to one of claims 1 to 4, wherein the support parts (30) and the delimiting edge region (34) of the operating element (18) are rigidly connected to each other.

6. The operating device according to one of claims 1 to 4, **characterized in that** the support parts (30) and the delimiting edge region (34) of the operating element (18) are mechanically coupled to each other by means of a resilient connection element (44) arranged therebetween.

7. The operating device according to claim 6, wherein the connection element (44) is resilient after compression perpendicular to the operating surface (20) of the operating element (18) and is resiliently shearable when the operating element is displaced orthogonally to such a compression perpendicular to the operating surface (20).

8. The operating device according to claim 6 or according to claim 7, further comprising an actuator controllable by the evaluation unit (62) for generating a tactile feedback when the operating element (18) is actuated with the predefined minimum pressing force by mechanical action on the operating element (18).

9. The operating device according to any one of claims 1 to 8, wherein the actuation sensors (60) comprise position sensors and/or force sensors and/or pressure sensors.

## Revendications

1. Dispositif de commande pour un véhicule, doté
- d'un boîtier (12) doté d'une face avant (14), laquelle comporte une ouverture d'accueil (16) délimitée par un bord d'ouverture, et doté d'une paroi arrière (22),
- d'un élément de commande (18) comportant une surface de commande (20) et disposé dans l'ouverture d'accueil (16) à distance du bord d'ouverture de celle-ci, lequel comporte une face avant (20) pourvue de la surface de commande (20) et une face arrière,
- d'un élément de fixation (26), lequel comporte une paroi de fond (28) et des pièces d'appui (30) en saillie par rapport à celle-ci, lesquelles se terminent en dessous d'une zone périphérique de délimitation (34) de l'élément de commande (18) et sont mécaniquement couplées à ce dernier dans sa zone périphérique de délimitation (34),
- dans lequel la paroi de fond (28) de l'élément de fixation (26) comporte une zone médiane (54) à distance des pièces d'appui (30) et une zone périphérique entourant celle-ci, dans lequel la paroi de fond (28) de l'élément de fixation (26) s'appuie sur la paroi arrière du boîtier (12) dans la zone médiane (54) et dans lequel la zone périphérique de la paroi de fond (28) comporte un écart par rapport à la paroi arrière du boîtier (12),
- de plusieurs capteurs d'actionnement (60) détectant un actionnement manuel de l'élément de commande (18), lesquels sont disposés entre la zone périphérique de la paroi de fond (28) de l'élément de fixation (26) et la paroi arrière du boîtier (12), dans lequel les capteurs d'actionnement (60) détectent les couples de flexion s'exerçant sur l'élément de fixation (26) à l'intérieur de sa zone périphérique entourant la zone médiane (54) lors d'un actionnement manuel de l'élément de commande (18), et
- d'une unité d'analyse (62), laquelle reçoit des signaux des capteurs d'actionnement (60) et analyse ceux-ci afin de reconnaître un actionnement manuel de l'élément de commande (18) avec une force de pression minimale prédéfinissable,
- dans lequel l'élément de commande (18) comporte un écran (36) doté d'une face avant affichant des informations,
**caractérisé**
- **en ce que** l'écran (36) comporte une plaque de protection (38) définissant la surface de commande (20) avec une unité d'affichage (40) disposée derrière cette plaque de protection (38) et destinée à l'affichage optique d'informations,
- **en ce que** la plaque de protection (38) déborde de tous les côtés au-dessus de l'unité d'affichage (40) et cette zone de débordement forme la zone périphérique de délimitation (34) de l'élément de commande (18) et ainsi cette zone de débordement de la plaque de protection (38) est mécaniquement couplée aux pièces d'appui (30) de l'élément de fixation (26) et
- **en ce que** l'élément de fixation (26) accueille une unité de rétroéclairage (46) destinée à rétroéclairer l'unité d'affichage (40).

2. Dispositif de commande selon la revendication 1, dans lequel l'unité d'analyse (62) analyse en outre les signaux des capteurs d'actionnement (60) afin de reconnaître sur quelle position de la surface de commande (20) de l'élément de commande (18) s'effectue l'actionnement manuel de l'élément de commande (18).

3. Dispositif de commande selon la revendication 1, dans lequel l'élément de commande (18) est pourvu d'un système de capteurs tactiles afin de reconnaître sur quelle position de la surface de commande (20) de l'élément de commande (18) s'effectue l'actionnement manuel de l'élément de commande (18).

4. Dispositif de commande selon la revendication 3, dans lequel le système de capteurs tactiles fonctionne de manière capacitive, résistive ou optique.

5. Dispositif de commande selon l'une des revendications 1 à 4, dans lequel les pièces d'appui (30) et la zone périphérique de délimitation (34) de l'élément de commande (18) sont liées entre elles de manière rigide.

6. Dispositif de commande selon l'une des revendications 1 à 4, dans lequel les pièces d'appui (30) et la zone périphérique de délimitation (34) de l'élément de commande (18) sont couplées mécaniquement entre elles au moyen d'un élément de liaison élastique (44) disposé entre celles-ci.

7. Dispositif de commande selon la revendication 6, dans lequel l'élément de liaison (44) peut cisailler de manière élastique après une compression s'effectuant perpendiculairement à la surface de commande (20) de l'élément de commande (18) et lors d'un déplacement s'effectuant de manière orthogonale à une telle compression perpendiculaire à la surface de commande (20).

8. Dispositif de commande selon la revendication 6 ou selon la revendication 7, doté en outre d'un actionneur commandable par l'unité d'analyse (62) afin de générer un retour tactile par action mécanique sur l'élément de commande (18) lors d'un actionnement de l'élément de commande (18) s'effectuant avec la force de pression minimale prédéfinie.

9. Dispositif de commande selon l'une des revendications 1 à 8, dans lequel les capteurs d'actionnement (60) comportent des capteurs de mouvement et/ou de force et/ou de pression.
